# EUROPEAN PATENT APPLICATION

(11) **EP 2 592 583 A1**
(43) Date of publication of application: **15.05.2013**
(21) Application number: 12170893.7
(22) Date of filing: 05.06.2012
(51) Int. Cl.: G06K 9/32, H04N 21/84, H04N 21/435

(54) **Image processing apparatus and controlling method for image processing apparatus**

(30) Priority: 14.11.2011 JP 2011248858
(71) Applicant: Kabushiki Kaisha Toshiba, Tokyo 105-8001 (JP)
(72) Inventor: Yamashita, Michio, Tokyo, 105-8001 (JP); Kuno, Shinji, Tokyo, 105-8001 (JP)
(74) Representative: Henkel, Breuer & Partner

(57) **Abstract**

According to one embodiment, an image processing apparatus includes, a receiver (111, 112) configured to receive a plurality of contents at a time, a decoder (112) configured to decode, at a time, the plurality of the contents received by the receiver, a keyword extraction module (1514) configured to extract, in order, a keyword from videos of the plurality of the decoded contents, a memory (1515) configured to store, for each of the contents, the keyword extracted by the keyword extraction module, and a controller (150) configured to control, for each of the contents, a processing interval of processing of extracting the keyword performed by the keyword extraction module.

## Description

Embodiment described herein relate generally to an image processing apparatus and a controlling method for an image processing apparatus.

Conventionally, electronic apparatuses such as an image processing apparatus capable of playing video contents such as movies, television programs, and games have been widely used in general. The contents played by the image processing apparatus may include various kinds of character strings embedded in videos.

In recent years, an image processing apparatus including multiple receivers and decoders have been put into practical use. The image processing apparatus as mentioned above can receive broadcast signals with multiple receivers, and can demodulate multiple contents at a time. Therefore, the image processing apparatus can record multiple contents at a time.

In recent years, the capacities of recording media (storage) for recording contents are increasing. Therefore, an image processing apparatus capable of recording contents over a long period of time has been put into practical use. An image processing apparatus including a large-capacity storage, multiple receivers, and multiple decoders, and capable of recording multiple contents over a long period of time has been put into practical use.

The image processing apparatus as mentioned above simultaneously records multiple contents over a long period of time. As a result, the number of recorded contents (recorded content) becomes enormous. For this reason, there is a problem in that a user who uses an image processing apparatus cannot check all the recorded contents.

A general architecture that implements the various features of the embodiments will now be described with reference to the drawings. The drawings and the associated descriptions are provided to illustrate the embodiments and not to limit the scope of the invention.
FIG. 1 is an exemplary view showing an image processing apparatus according to an embodiment.
FIG. 2 is an exemplary view showing the image processing apparatus according to an embodiment.
FIG. 3 is an exemplary view showing the image processing apparatus according to an embodiment.
FIG. 4 is an exemplary view showing the image processing apparatus according to an embodiment.
FIG. 5 is an exemplary view showing the image processing apparatus according to an embodiment.
FIG. 6 is an exemplary view showing the image processing apparatus according to an embodiment.
FIG. 7 is an exemplary view showing the image processing apparatus according to an embodiment.
FIG. 8 is an exemplary view showing the image processing apparatus according to an embodiment.
FIG. 9 is an exemplary view showing the image processing apparatus according to an embodiment.
FIG. 10 is an exemplary view showing the image processing apparatus according to an embodiment.
FIG. 11 is an exemplary view showing the image processing apparatus according to an embodiment.
FIG. 12 is an exemplary view showing the image processing apparatus according to an embodiment.
FIG. 13 is an exemplary view showing the image processing apparatus according to an embodiment.

Various embodiments will be described hereinafter with reference to the accompanying drawings. In general, according to one embodiment, an image processing apparatus comprises, a receiver configured to receive a plurality of contents at a time, a decoder configured to decode, at a time, the plurality of the contents received by the receiver, a keyword extraction module configured to extract, in order, a keyword from videos of the plurality of the decoded contents, a memory configured to store, for each of the contents, the keyword extracted by the keyword extraction module, and a controller configured to control, for each of the contents, a processing interval of processing of extracting the keyword performed by the keyword extraction module.

Hereinafter, an image processing apparatus and a controlling method for the image processing apparatus according to an embodiment will be explained in detail with reference to drawings.

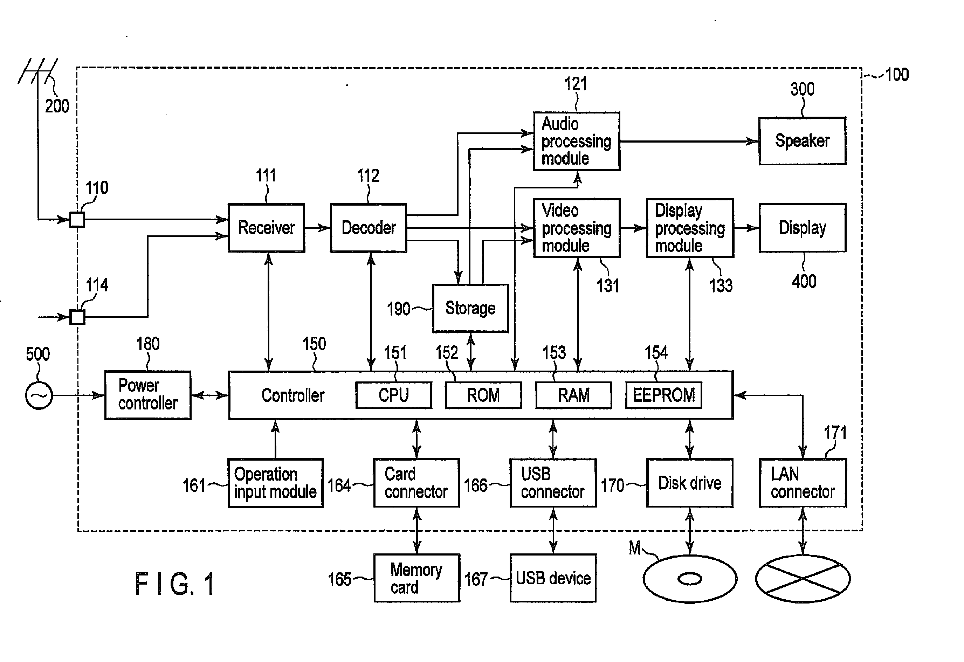

FIG. 1 illustrates an example of a broadcast receiving apparatus 100 serving as an image processing apparatus according to an embodiment. The broadcast receiving apparatus 100 includes a main body provided with a display (display module 400) for displaying video and a foot portion for supporting the main body in such a manner that it can stand on its own.

In addition, the broadcast receiving apparatus 100 includes a broadcast input terminal 110, a receiver 111, a decoder 112, a communication interface 114, an audio processing module 121, a video processing module 131, a display processing module 133, a controller 150, an operation input module 161, a card connector 164, a USB connector 166, a disk drive 170, a LAN connector 171, a power controller 180, and a storage 190. In addition, the broadcast receiving apparatus 100 includes a speaker 300 and a display 400.

The broadcast input terminal 110 is, for example, an input terminal to which a digital broadcast signal received by an antenna 200 is input. The antenna 200 receives, for example, a digital terrestrial broadcast signal, a BS (broadcasting satellite) digital broadcast signal, and/or, a 110-degrees CS (communication satellite) digital broadcast signal. In other words, the broadcast input terminal 110 receives contents such as programs provided in broadcast signals.

The broadcast input terminal 110 provides the received digital broadcast signal to the receiver 111. The receiver 111 is a receiver for digital broadcast signals. The receiver 111 tunes in to (selects) a digital broadcast signal provided from the antenna 200. The receiver 111 transmits the digital broadcast signal, to which the receiver 111 tunes in to, to the decoder 112. When the signal provided from the transmission input terminal 110 or the communication interface 114 is an analog signal, the receiver 111 converts the signal into a digital signal.

The decoder 112 demodulates the received digital broadcast signal. Further, the decoder 112 performs signal processing on the demodulated digital broadcast signal (content). As a result, the decoder 112 decodes a video signal, an audio signal, and other data signals from the digital broadcast signal. For example, the decoder 112 decodes a transport stream (TS), in which the video signal, the audio signal, the other data signals, and the like, are multiplexed, from the digital broadcast signal.

The decoder 112 provides the audio signal to the audio processing module 121. In addition, the decoder 112 provides the video signal to the video processing module 131. Further, a decoder signal processing module 113 provides the data signal to the controller 150. In other words, the antenna 200, the receiver 111, and the decoder 112 function as a receiver module configured to receive a content.

The communication interface 114 includes one of or a plurality of interfaces capable of receiving a content, such as an HDMI (High Definition Multimedia Interface) (registered trademark) terminal, an audio input terminal, an S-video terminal, a component video terminal, a D video terminal, a D-Sub terminal, and a DVI-I terminal. The communication interface 114 receives, from another apparatus, a content in which a digital video signal, a digital audio signal, and the like are multiplexed. The communication interface 114 provides the digital signal (content), received from another apparatus, to the receiver 111. The communication interface 114 provides a content, received from another apparatus, to the decoder 112. In other words, the communication interface 114 functions as a receiver module configured to receive a content.

The decoder 112 performs signal processing on a content provided from the communication interface 114 via the receiver 111. For example, the decoder 112 separates the digital signal into a digital video signal, a digital audio signal, and a data signal. The decoder 112 provides the digital audio signal to the audio processing module 121. Further, the decoder 112 provides the digital video signal to the video processing module 131. Further, the decoder 112 provides other information about a content to the controller 150.

Still further, the decoder 112 provides the content to the storage 190 explained later based on control of the controller 150. The storage 190 stores the provided content. Therefore, the broadcast receiving apparatus 100 can record the content.

The audio processing module 121 converts the digital audio signal received from the decoder 112 into a signal (audio signal) in a format that can be reproduced by the speaker 300. The audio processing module 121 provides the audio signal to the speaker 300. The speaker 300 plays sound based on the provided audio signal.

The video processing module 131 converts the digital video signal received from the decoder 112 into a video signal in a format that can be reproduced by the display 400. In other words, the video processing module 131 decodes (reproduces) the video signal received from the decoder 112 and makes it into a video signal in a format that can be reproduced by the display 400. Further, the video processing module 131 superimposes an OSD signal, provided from an OSD processing module not shown, onto the video signal. The video processing module 131 outputs the video signal to the display processing module 133.

The OSD processing module generates an OSD signal for superimposing and displaying a GUI (graphic user interface) screen, subtitles, a time, other information, or the like onto a screen based on the data signal provided by the decoder 112 and/or the control signal provided by the controller 150. The OSD processing module may be provided separately as a module in the broadcast receiving apparatus 100, or may be provided as a function of the controller 150.

For example, the display processing module 133 performs color, brightness, sharpness, contrast, or other image quality adjusting processing on the received video signal based on the control of the controller 150. The display processing module 133 provides the video signal, of which image quality has been adjusted, to the display 400. The display 400 displays the video based on the video signal provided.

The display 400 includes a liquid crystal display device including, for example, a liquid crystal display panel having multiple pixels arranged in a matrix form and a backlight for illuminating this liquid crystal panel. The display 400 displays a video based on the video signal provided from the broadcast receiving apparatus 100.

Note that, instead of the display 400, the broadcast receiving apparatus 100 may be configured to have a video output terminal. Further, instead of the speaker 300, the broadcast receiving apparatus 100 may be configured to have an audio output terminal. In this case, the broadcast receiving apparatus 100 outputs the video signal to a display device connected to the video output terminal, and outputs an audio signal to a speaker connected to the audio output terminal. Therefore, the broadcast receiving apparatus 100 can cause the display device to display the video and can cause the speaker to output the audio.

The controller 150 functions as a controller module configured to control operation of each module of the broadcast receiving apparatus 100. The controller 150 includes a CPU 151, a ROM 152, a RAM 153, an EEPROM 154, and the like. The controller 150 performs various kinds of processing based on an operation signal provided from the operation input module 161.

The CPU 151 has operation elements and the like executing various kinds of operation processing. The CPU 151 achieves various kinds of functions by executing programs stored in the ROM 152, the EEPROM 154, or the like.

The ROM 152 stores programs for achieving various kinds of functions, programs for controlling the broadcast receiving apparatus 100, and the like. The CPU 151 activates programs stored in the ROM 152 based on an operation signal provided by the operation input module 161. Accordingly, the controller 150 controls operation of each module.

The RAM 153 functions as a work memory of the CPU 151. In other words, the RAM 153 stores results of operation of the CPU 151, data read by the CPU 151, and the like.

The EEPROM 154 is a nonvolatile memory storing various kinds of setting information, programs, and the like.

The operation input module 161 includes, for example, an operation key, a keyboard, a mouse, an audio input device, a touch pad, or other input devices capable of generating an operation signal according to input. Further, for example, the operation input module 161 may be configured to have a sensor and the like receiving an operation signal transmitted from a remote controller. Further, the operation input module 162 may be configured to have the input device and the sensor explained above. In other words, the operation input module 161 functions as an operation signal receiver module configured to receive the operation signal.

The operation input module 161 provides the received operation signal to the controller 150. The controller 150 causes the broadcast receiving apparatus 100 to perform various kinds of processing based on the operation signal provided from the operation input module 161.

It should be noted that the touch pad includes a device generating position information based on an electrostatic sensor, a thermo sensor, or other methods. When the broadcast receiving apparatus 100 includes the display 400, the operation input module 161 may be configured to include a touch panel and the like integrally formed with the display 400.

The remote controller generates an operation signal based on user's input. The remote controller transmits the generated operation signal to a sensor of the operation input module 161 via infrared communication. It should be noted that the sensor and the remote controller may be configured to transmit and receive the operation signal via other wireless communication such as radio wave.

The card connector 164 is an interface, for example, for communicating with a memory card 165 storing a motion picture content. The card connector 164 reads content data of motion pictures from the connected memory card 165, and provides the content data to the controller 150.

The USB connector 166 is an interface for communicating with a USB device 167. The USB connector 166 provides the signal, provided from the connected USB device 167, to the controller 150.

For example, when the USB device 167 is an operation input device such as a keyboard, the USB connector 166 receives the operation signal from the USB device 167. The USB connector 166 provides the received operation signal to the controller 150. In this case, the controller 150 executes various kinds of processing based on the operation signal provided from the USB connector 166.

Further, for example, when the USB device 167 is a storage device storing content data of motion pictures, the USB connector 166 can obtain the content from the USB device 167. The USB connector 166 provides the obtained content to the controller 150.

The disk drive 170 has a drive capable of loading, for example, a compact disc (CD), a digital versatile disk (DVD), a Blu-ray Disc (registered trademark), or other optical disks M capable of recording content data of motion pictures. The disk drive 170 reads the content from the loaded optical disk M, and provides the read content to the controller 150.

The LAN connector 171 is an interface for connecting the broadcast receiving apparatus 100 to a network. The controller 150 can download and upload various kinds of data via the network when the LAN connector 171 is connected to a public circuit by way of a LAN cable, a wireless LAN, or the like.

The power controller 180 controls supply of electric power to each module of the broadcast receiving apparatus 100. The power controller 180 receives electric power from a commercial power supply 500 via, for example, an AC adapter. The commercial power supply 500 provides electric power of an alternate current to the power controller 180. The power controller 180 converts the received electric power of the alternate current into a direct current and provides the direct current to each module.

In addition, the broadcast receiving apparatus 100 may further include other interfaces. An example of interface includes Serial-ATA. The broadcast receiving apparatus 100 can obtain a content recorded in the device connected via the interface and reproduce the content. Further, the broadcast receiving apparatus 100 can output the reproduced audio signal and video signal to the device connected via the interface.

When the broadcast receiving apparatus 100 is connected to a network via the interface, the broadcast receiving apparatus 100 can obtain content data of motion pictures on the network, and reproduce the content data.

The storage 190 is a storage device storing the content. The storage 190 includes a large-capacity storage device such as a hard disk (HDD), a solid state drive (SSD), or a semiconductor memory. The storage 190 may be constituted by a storage device connected to the USB connector 166, the LAN connector 171, the communication interface 114, or other interfaces.

As described above, when a content is recorded, the controller 150 inputs data of a content demodulated by the decoder 112 to the storage 190. Further, the controller 150 gives the storage 190 an address at which the content is stored in the storage 190. The storage 190 stores the content, provided from the decoder 112, at an address given by the controller 150.

It should be noted that the storage 190 may be configured to store a TS which is decoded from a digital broadcast signal, or may be configured to store a compressed content obtained by compressing the TS according to AVI, MPEG, or other compression methods.

Further, the controller 150 can read and reproduce the content stored in the storage 190. For example, the controller 150 gives an instruction of an address in the storage 190 to the storage 190. The storage 190 reads the content from the address given by the controller 150. The storage 190 provides the read content to the audio processing module 121, the video processing module 131, the controller 150, and the like. Therefore, the broadcast receiving apparatus 100 can reproduce the recorded content.

It should be noted that the broadcast receiving apparatus 100 includes multiple receivers 111 and multiple decoders 112. Accordingly, the broadcast receiving apparatus 100 can receive multiple contents at a time, and can decode the multiple received contents at a time. Therefore, the broadcast receiving apparatus 100 can obtain multiple pieces of reproducible content data at a time. In other words, the broadcast receiving apparatus 100 can record multiple contents at a time.

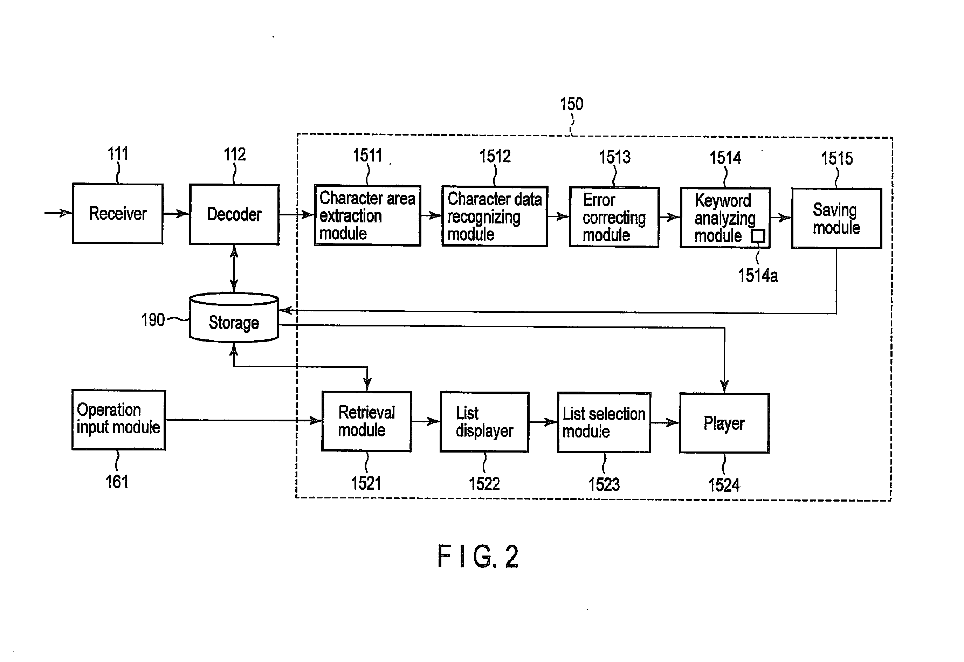

FIG. 2 illustrates an example of functions provided in the controller 150.

As shown in FIG. 2, the controller 150 causes the CPU 151 to execute programs, thus capable of achieving various kinds of functions. For example, the controller 150 includes a character area extraction module 1511, a character data recognizing module 1512, an error correcting module 1513, a keyword analyzing module 1514, and a saving module 1515. Further, the controller 150 includes a retrieval module 1521, a list displayer 1522, list selection module 1523, and a player 1524.

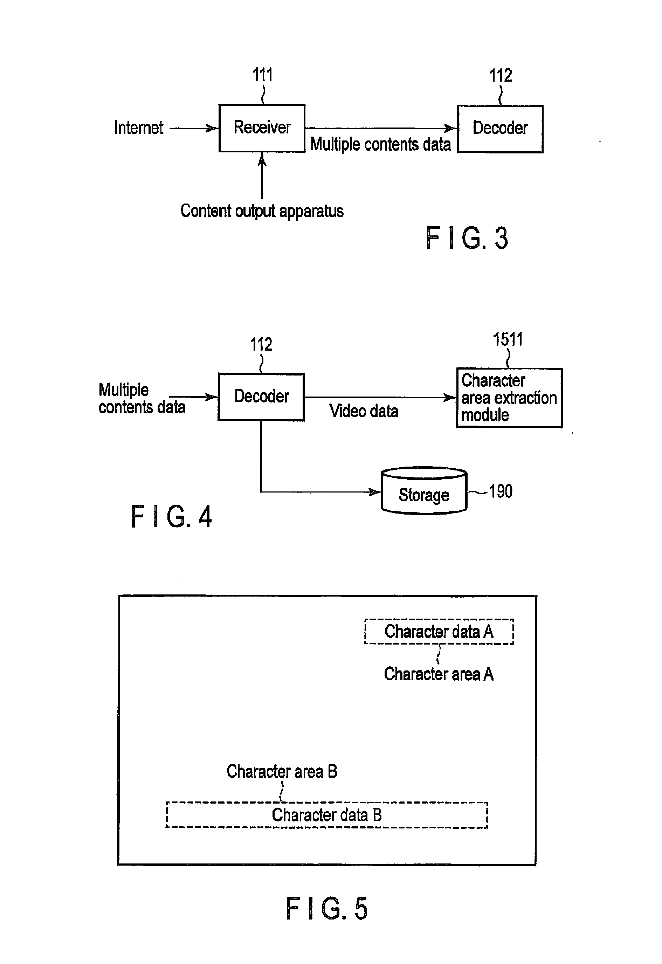

FIGS. 3 and 4 illustrate an example of processing for saving a content.

As shown in FIG. 3, the receiver 111 receives the content. For example, the receiver 111 receives the content from the Internet (network) via the LAN connector 171. Further, the receiver 111 receives the content from the communication interface 114, the USB connector 166, the card connector 164, or a content output apparatus that outputs the content by way of other interfaces. Still further, the receiver 111 receives the content from a digital broadcast signal received by way of the broadcast input terminal 110.

The receiver 111 provides the received content to the decoder 112. As described above, the broadcast receiving apparatus 100 includes the multiple receivers 111 and the multiple decoders 112. The multiple receivers 111 can provide multiple contents to the multiple decoders 112.

Further, the decoder 112 can decode the provided multiple contents at a time, and obtain reproducible multiple content data. In other words, the decoder 112 can obtain video signals and audio signals of the multiple contents at a time. Further, the decoder 112 obtains data signals of the multiple contents from the multiple content data.

As shown in FIG. 4, the decoder 112 outputs the content data to the storage 190 based on control of the controller 150. Therefore, the storage 190 can record the multiple contents at a time.

The decoder 112 outputs the content data to the video processing module 131 and the audio processing module 121 based on control of the controller 150. Therefore, the broadcast receiving apparatus 100 can reproduce the multiple contents at a time.

The decoder 112 outputs a video signal of a content to the character area extraction module 1511 of the controller 150. Multiple video signals of contents may be provided to the character area extraction module 1511 from the decoder 112. However, for simplifying the explanation, it is assumed that one video signal is provided from the decoder 112 to the character area extraction module 1511 in this explanation.

Still further, the decoder 112 outputs an audio signal and a data signal of a content to the controller 150. This data signal includes, for example, data representing a time, data of EPG, and character data such as subtitles. The controller 150 detects scenes based on the audio signal. Further, the controller 150 may be configured to recognize a scene based on the data included in the data signal.

The character area extraction module 1511 analyzes the video signal (video data), and extracts an area in which characters exist (character area) from the video. The character area is an area including a character string, and represents, for example, coordinate information about the top, bottom, right, and left of the character string. The character area extraction module 1511 outputs information representing a position of a character area (position information).

The character area extraction module 1511 may be configured to detect a character area according to any method. For example, the character area extraction module 1511 detects, as a character area, an area in which the ratio of change of brightness of the video is equal to or more than a certain level.

Further, possible cases include a case where there is no character area in the video, a case where there is one character area in the video, and a case where there are multiple character areas in the video. When there is one character area in the video, the character area extraction module 1511 calculates information representing the position of the one character area (position information). For example, the character area extraction module 1511 calculates the position of the one character area and the size of the character area. The character area extraction module 1511 may be configured to calculate coordinates at four corners of one character area.

When there are multiple character areas in the video, the character area extraction module 1511 calculates position information for each character area. In this case, the character area extraction module 1511 outputs position information about multiple character areas.

The character data recognizing module 1512 recognizes characters in the character area. In other words, the character data recognizing module 1512 recognizes the character area based on the position information of the character area that is output from the character area extraction module 1511. The character data recognizing module 1512 recognizes the characters based on the video in the character area.

The character data recognizing module 1512 may be configured to recognize characters according to any method. For example, the character data recognizing module 1512 recognizes characters in the video using Optical Character Reader (OCR). For example, the character data recognizing module 1512 recognizes the above characters according to SJIS, EUC, or other character codes.

In the example as shown in FIG. 5, character data A and character data B are embedded in the video. The character area extraction module 1511 extracts an area of the video in which the character data A is embedded (character area A) and an area of the video in which the character data B is embedded (character area B). The character area extraction module 1511 outputs position information representing the character area A and position information representing the character area B to the character data recognizing module 1512.

The character data recognizing module 1512 recognizes the character data A from the video in the character area A. The character data recognizing module 1512 recognizes the character data B from the video in the character area B. Accordingly, the character data recognizing module 1512 can recognize the character data embedded in the video.

Still further, the character data recognizing module 1512 may be configured to recognize the type of font, the size of character, the number of character, character color, and the like of the character data. For example, the character data recognizing module 1512 can recognize the font and the size of character of the character data based on the video in the character area and a dictionary for each font provided therein.

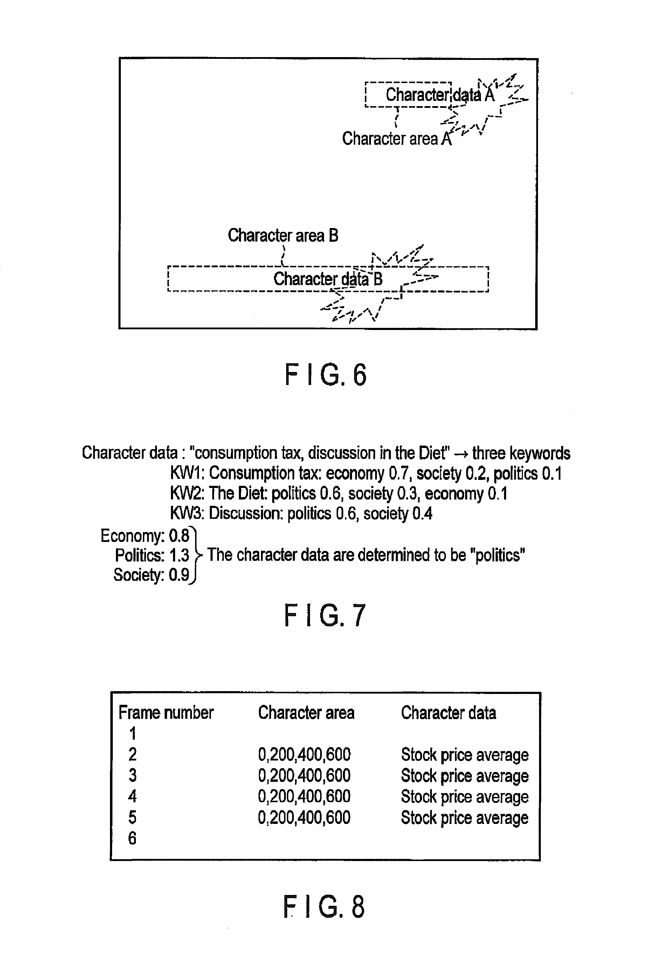

As shown in FIG. 6, in some cases, the video of the content may include noise, background, overlapping of video, or other elements. Due to the effect of the noise, background, overlapping of video, or other elements included in the video of the content, errors may occur in the extraction of the character area by the character area extraction module 1511 and recognition of the character data by the character data recognizing module 1512.

The error correcting module 1513 corrects the extraction result of the character area and the recognition result of the character data. The characters (telop) appearing in the video are often displayed with the same characters at the same position over multiple frames continuously. Accordingly, the error correcting module 1513 corrects errors based on an extraction result of character areas and a recognition result of character data which are detected from preceding and subsequent frames.

For example, in order to correct a character area, the error correcting module 1513 determines that it is highly possible that an error has occurred when the positions and the sizes of the character areas detected from the preceding and subsequent frames are different from the position and the size of the character area detected from the current frame. In this case, for example, the error correcting module 1513 corrects the extraction result of the character areas so that the character areas detected from the preceding and subsequent frames and the character area detected from the current frame are at the same area.

For example, error correcting module 1513 looks up the character area extracted from several preceding and subsequent frames and the character recognition result recognized from the video of this character area, and recognizes the correct character area and the character data based on the number of matching results.

For example, the error correcting module 1513 collates character data, serving as a character recognition result recognized from each frame, with a dictionary stored in the ROM 152, the EEPROM 154, or the like in advance. The error correcting module 1513 may be configured to estimate correct character data based on a collation result.

The controller 150 may be configured to include the error correcting module 1513, provided at a stage subsequent to the character area extraction module 1511, for correcting a character area, and include the error correcting module 1513, provided at a stage subsequent to the character data recognizing module 1512, for correcting a recognition result of character data.

The keyword analyzing module 1514 recognizes keywords from the recognized character data. A keyword dictionary 1514a generated in advance is used for keyword recognition.

The keyword dictionary 1514a stores a genre (data representing a genre) associated with each keyword. The keyword dictionary 1514a may be configured to store multiple genres associated with each keyword. Further, the keyword dictionary 1514a has genre association degree (for example, point) that is set for each genre of each keyword.

First, the keyword analyzing module 1514 extracts a keyword from character data recognized by the character data recognizing module 1512. For example, the keyword analyzing module 1514 grammatically analyzes the character data, and extracts a subject, a predicate, nouns, articles, particles, and the like from the character data. In other words, the keyword analyzing module 1514 separates the character data with segments, and extracts separated words as keywords.

The keyword analyzing module 1514 collates the extracted keywords with the keyword dictionary 1514a, and identifies the genre of the character data.

FIG. 7 illustrates an example of the keyword dictionary 1514a, and particular example of genres. As shown in FIG. 7, multiple genres are set for each keyword. Further, the genre association degree is set for each genre. When the character data includes one keyword, the keyword analyzing module 1514 identifies, as a genre of character data, a genre having the highest genre association degree from among the genres associated with the keyword.

When the character data includes multiple keywords, the keyword analyzing module 1514 unifies the genre association degrees of the genres associated with the respective keywords, and identifies the genre of the character data. For example, the keyword analyzing module 1514 adds, for each genre, the genre association degrees of the genres associated with the respective keywords, and identifies the genre having the highest genre association degree as the genre of the character data.

According to the example of FIG. 7, character data "consumption tax, discussion in the Diet" include key words such as "consumption tax", "the Diet", and "discussion". The "consumption tax" is associated with a genre association degree 0.7 of a genre "economy", a genre association degree 0.2 of a genre "society", and a genre association degree 0.1 of the genre "politics". The "the Diet" is associated with a genre association degree 0.6 of the genre "politics", a genre association degree 0.3 of the genre "society", and a genre association degree 0.1 of the genre "economy". The "discussion" is associated with a genre association degree 0.6 of the genre "politics" and a genre association degree 0.4 of the genre "society".

In this case, the character data "consumption tax, discussion in the Diet" has a genre association degree 0.8 of the genre "economy", a genre association degree 1.3 of the genre "politics", and a genre association degree 0.9 of the genre "society". As a result, the keyword analyzing module 1514 identifies the genre "politics" as the genre of the character data.

Still further, the keyword analyzing module 1514 may be configured to apply weighting according to relationship between keywords such as a subject and a predicate. For example, a component such as a subject and a predicate is identified for each keyword, and the above genre association degree is multiplied by a coefficient set in advance according to the identified component. Therefore, the keyword analyzing module 1514 can identify a genre in view of the component for each keyword.

Still further, the keyword analyzing module 1514 learns based on the recognized character data, thus capable of updating the keyword dictionary 1514a. It should be noted that the keyword analyzing module 1514 may be configured to update the keyword dictionary 1514a according to any learning method.

The saving module 1515 stores, to the storage 190, additional information such as a character area, character data (including the type of font, the size of character, the number of characters, and a character color), a genre, a channel, a date, and a frame number (display frame number of character string). The saving module 1515 saves these data in association with the contents.

FIG. 8 illustrates an example of additional information saved by the saving module 1515. Characters appearing on the screen are likely to be continuously displayed in the same area for several seconds in a fixed manner. For this reason, the character area is likely to be located at the same position and be of the same size over multiple frames. Based on this tendency, the saving module 1515 compares character areas of the frames of the past with character data, thus capable of determining identical character data.

FIG. 8 indicates that character data "stock price average" is recognized in a character area "0, 200, 400, 600" over frame numbers 2 to 5. Still further, the saving module 1515 may save information such as the type of font, the size of character, the number of characters, a character color, a genre, a channel, and a date of character data in association with each frame.

By associating the same character data that have been determined, the saving module 1515 can recognize a start frame and an end frame in which the character data have been detected. The saving module 1515 may be configured to also save, to the storage 190, a start frame and an end frame of each piece of character data.

In other words, when character areas exist at the same position of multiple successive frames, the controller 150 respectively recognizes, as a start frame and an end frame, the first frame and the last frame in which the character areas are displayed. Still further, when character areas exist at the same position of multiple successive frames, and when character data in the character areas are in agreement over the multiple successive frames, the controller 150 may be configured to identify the first frame and the last frame in which the character areas are displayed.

As a result of the above processing, the controller 150 can record the content to the storage 190, further extract the character data embedded in the video of the content as a keyword for each word, and store the character data as well as the content to the storage 190. Further, the controller 150 can store, to the storage 190, additional information such as a character area, character data (including the type of font, the size of character, the number of character, and a character color), a genre, a channel, a date, and a frame number (display frame number of character string).

Still further, by performing the above processing on the multiple contents decoded by the decoder 112, the controller 150 can store, to the storage 190, keywords included in the multiple contents, character areas, character data (including the type of font, the size of character, the number of character, and character colors), genres, channels, dates, and the frame numbers (display frame numbers of character strings), and the like, together with the contents.

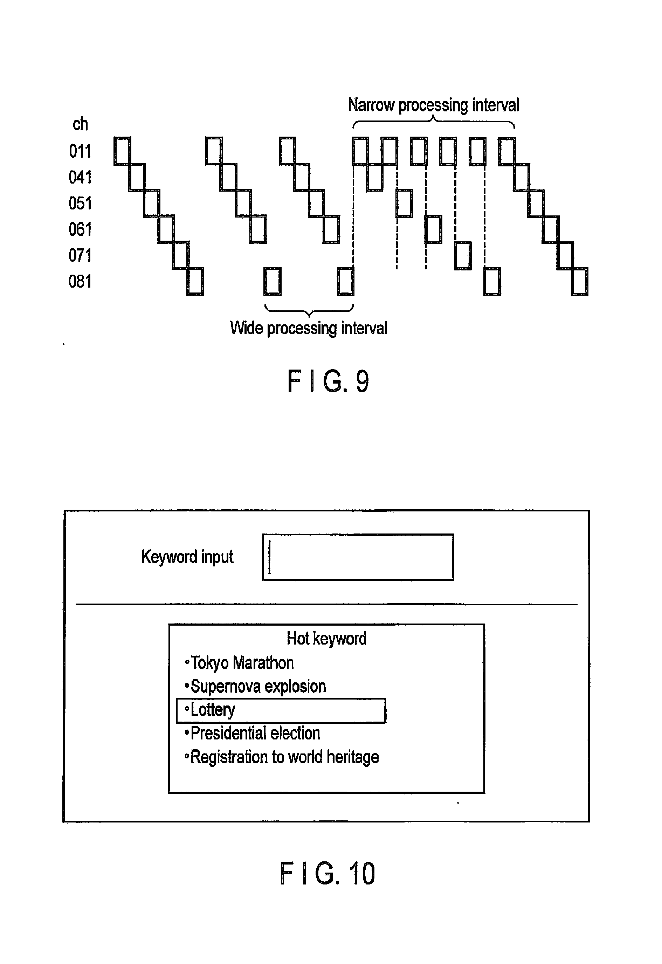

FIG. 9 illustrates an example of processing performed on multiple contents by the controller 150. FIG. 9 illustrates an example where the decoder 112 decodes a channel 011, a channel 041, a channel 051, a channel 061, a channel 071, and a channel 081. In this case, video signals of contents of the channel 011, the channel 041, the channel 051, the channel 061, the channel 071, and the channel 081 are provided to the controller 150 at a time.

The controller 150 successively performs processing such as extraction of a character area, recognition of character data, error correction, and analysis of keywords on each content. In other words, the controller 150 performs processing on the video of one frame of the content of the channel 011, and subsequently performs processing on the video of one frame of the content of the channel 041. The controller 150 performs such processing up to the channel 081, and returns back to the processing of the channel 011.

By repeatedly executing this processing, the controller 150 can extract character data embedded in the videos of the contents of the multiple channels, and further identify the genres of the character data.

As described above, the same character data are often continuously displayed in the same character area over multiple frames continuously. For this reason, it is not necessary to perform the above processing on all the frames. For example, when the processing load of the system is high, an interval of frames on which the processing is executed may be widened, and when the processing load of the system is low, an interval of frames on which the processing is executed may be narrowed. In this case, the controller 150 can perform the processing more efficiently.

According to the genre of the content, the degree of appearance of characters in the video is greatly different. For example, in news and the like, characters frequently appear on the screen, but in drama, animation, and the like, characters hardly appear on the screen on the contrary. For example, the controller 150 may be configured to use information about EPG to identify a genre of a content, and change the frequency of the above processing according to the identified genre.

For example, the controller 150 may be configured to change the frequency of the above processing according to viewing history of contents in the past, recording history of contents in the past, search history, time period, viewing rate, or the like. For example, the controller 150 obtains distribution information and the like from a server and the like connected to a network, and obtains information about the viewing rate, the search history, and the like from the distribution information.

Still further, the controller 150 may be configured to change the interval of frames on which the processing is executed, according to the tendency of character detection of frames in the past. Still further, the controller 150 may detect a CM section, and may change the interval of frames on which the processing is executed in the CM section.

In other words, the controller 150 controls the processing interval of the keyword extracting processing for each content based on one of or a combination of two or more of the processing load of the entire broadcast receiving apparatus 100, the genre of the content, the viewing history, the recording history, the search history, the time period, the viewing rate of the content, the keyword extraction result of frames in the past, and the detection result of the CM section.

Next, search and reproduction of a content will be explained.

As described above, the operation input module 161 receives user's operation input, and outputs the operation input to the controller 150. The operation input module 161 inputs a keyword to the retrieval module 1521 of the controller 150 based on the input.

FIG. 10 illustrates a search screen of contents stored in the storage 190. When search of the content is executed, the retrieval module 1521 generates a search screen as shown in FIG. 10, and causes the display 400 to display the search screen.

In the search screen, an input field for inputting a keyword is displayed. The retrieval module 1521 displays the keyword, which is input with the operation input module 161, in this input field.

The retrieval module 1521 may be configured to receive a keyword from the Internet (network) via the LAN connector 171. The retrieval module 1521 may be configured to receive a keyword which is output from a device connected by way of the communication interface 114, the USB connector 166, the card connector 164, or other interfaces. Still further, the retrieval module 1521 may be configured to receive a keyword from a digital broadcast signal received by way of the broadcast input terminal 110.

For example, there is a server provided in a network, wherein the server obtains keywords searched by multiple broadcast receiving apparatuses 100 connected to a network, counts the number for each obtained keyword, and distributes, as a list, the high-ranking keywords thus counted to the broadcast receiving apparatuses 100. The retrieval module 1521 receives the keywords from such server, and as shown in FIG. 10, displays the keywords as the list on the search screen in such a manner that a keyword can be selected, so that a user can be notified of a keyword attracting attention.

In other words, the retrieval module 1521 receives multiple keywords from the outside, and generates the screen including the multiple received keywords as the list. The retrieval module 1521 performs searching using a keyword selected on this screen.

The broadcast receiving apparatus 100 may be configured to specify a period in which the number of keywords is counted and transmit the period to the server. The retrieval module 1521 may be configured to narrow down keywords displayed as the list on the search screen based on user information about sex, age, preferred program genres, or the like registered to the broadcast receiving apparatus 100.

In this case, the retrieval module 1521 selects a genre based on input, and searches, from the storage 190, contents having frames consistent with the selected genre and including the selected keyword.

Still further, the retrieval module 1521 may be configured to narrow down keywords displayed as the list on the search screen based on keywords which are input in the past, contents viewed in the past and their genres, and contents recorded in the past and their genres.

As described above, the retrieval module 1521 identifies a keyword according to input or selection. The retrieval module 1521 may be configured to identify multiple keywords. For example, the retrieval module 1521 performs searching based on multiple keywords under AND or OR condition.

The retrieval module 1521 searches contents satisfying a search condition from among the contents stored in the storage 190 based on a keyword which is input or selected, a channel, a date, a genre, or other search conditions. The retrieval module 1521 outputs the search result to the list displayer 1522. It should be noted that a database function and the like can be used for the search processing. In other words, the retrieval module 1521 looks up the additional information as well as the contents stored by the saving module 1515 to the storage 190, and searches a content satisfying the search condition.

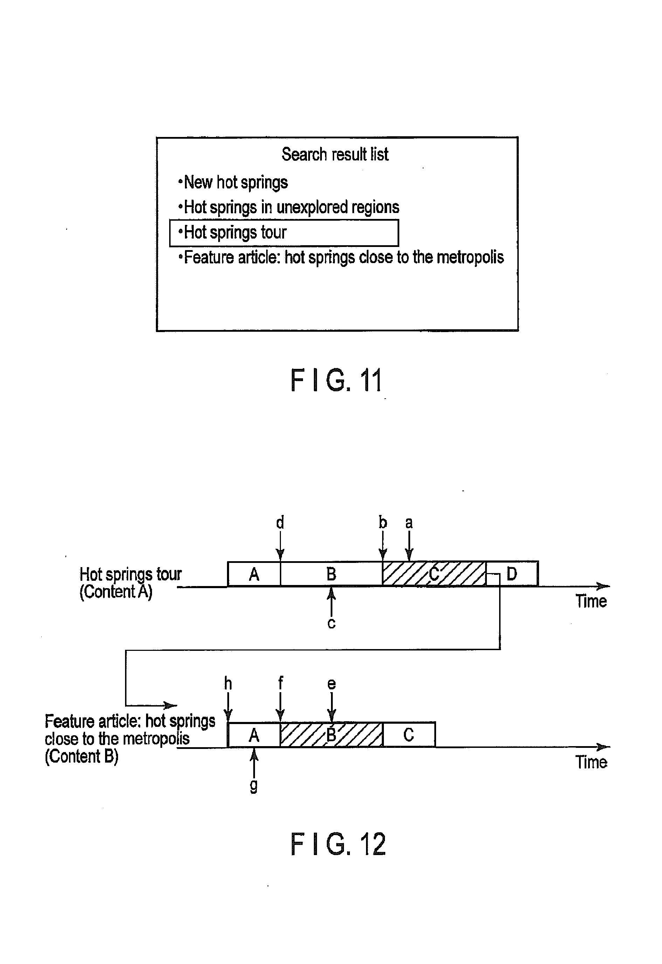

The list displayer 1522 generates a search result screen based on the search result that is output from the retrieval module 1521, and causes the display 400 to display the search result screen. For example, as shown in FIG. 11, the list displayer 1522 displays titles (content names) of the searched contents as a list. In this case, the list displayer 1522 sorts the display order of the content names based on one of or a combination of two or more of a date/time, a display time of a keyword, a display position of a keyword, importance of a keyword, the type of character, the size of character, and a viewing rate of a content.

For example, when sorted in the order of the date/time, the list displayer 1522 displays, as the list, the contents in the ascending order of the time.

The list displayer 1522 may be configured to display, on the search result screen, character data including a keyword, a channel, a keyword display time, a genre of a content or a scene, a numerical value representing the degree of match with a keyword, and the like.

For example, a character string representing a section of a content is likely to be displayed at the upper right corner of the screen for a certain period of time. Introduction, speeches, and the like of a commentator are likely to be displayed in the center of the lower part of the screen for several seconds. Accordingly, the list displayer 1522 sorts the display order of the content names according to the keyword display time, thus capable of displaying a list which allows a user to easily find a scene featuring a keyword in a section.

It should be noted that the controller 150 detects scenes based on the audio signal. In this case, the controller 150 determines that a scene has been changed when, for example, the audio becomes silent in a certain period. The controller 150 may be configured to detect scenes based on the video signal. For example, the controller 150 calculates the histogram of brightness of the video, and when there is a change equal to or more than a certain level, it is determined that the scene has been changed.

In addition, by setting a point to each keyword stored in the keyword dictionary 1514a in advance, the list displayer 1522 can perform sorting according to the points of the keywords. The points are calculated according to determination of, for example, the degree of fame, the degree of importance, the degree of precedence, the degree of appearance. For example, the point of Mount Fuji is set at a higher value than Mount Takao since Mount Fuji is determined more famous than Mount Takao. In this manner, by sorting based on the point set in the keyword dictionary 1514a for each keyword, the list displayer 1522 can change the display order of the contents according to more precise setting.

The list selection module 1523 selects a content according to operation that is input to the display of the search result screen displayed as a list by the list displayer 1522. The list selection module 1523 generates information for identifying a selected content (list selection information), and outputs the information to the player 1524. The list selection information includes, for example, a content name, an address in which a content is stored, a record number of a content, and the like.

Further, the list selection module 1523 may be configured to add information representing the position of the scene including the keyword identified by the retrieval module 1521 (scene information) to the list selection information. The scene information includes information representing a reproduction position of the content such as a frame number, a time, or a scene.

The player 1524 reads the content indicated by the list selection information from the storage 190, and reproduces the content. When the scene information is added to the list selection information, the content is reproduced based on the position indicated by the scene information.

For example, the player 1524 starts reproducing the content from the position indicated by the scene information. Alternatively, the player 1524 may be configured to start reproducing the content from a position a certain time before the position indicated by the scene information. Still further, the player 1524 may be configured to start reproducing the content from the head of the scene including the position indicated by the scene information. Still further, the player 1524 may be configured to start reproducing the content from the head of a scene immediately before the scene including the position indicated by the scene information.

FIG. 12 illustrates an example of reproduction of a content. FIG. 12 illustrates an example where a content "hot springs tour" (content A) and a content "feature article: hot springs close to the metropolis" (content B) are extracted as a search result based on a keyword.

The content A includes scenes A, B, C, and D. The scene C of the content A includes a frame in which the keyword used for the search is embedded in the video.

The content B includes scenes A, B, and C. The scene B of the content B includes a frame in which the keyword used for the search is embedded in the video.

A position a on the content A indicates the position of the frame in which the keyword is embedded in the video. A position b on the content A indicates the head of the scene including the frame in which the keyword is embedded in the video. A position c on the content A indicates a position a certain time before the head of the scene including the frame in which the keyword is embedded in the video. A position d on the content A indicates the head of a scene immediately before the scene including the frame in which the keyword is embedded in the video.

As described above, the player 1524 starts reproducing the content from any one of the positions a to d.

The player 1524 may be configured to reproduce a scene including the keyword in another content when the scene including the keyword has been reproduced.

For example, as shown in FIG. 12, the player 1524 starts reproducing the content B when the scene C of the content A has been reproduced.

It should be noted that a position e on the content B indicates a position of a frame in which the keyword is embedded in the video. A position f on the content B indicates the head of the scene including the frame in which the keyword is embedded in the video. A position g on the content B indicates a position a certain time before the head of the scene including the frame in which the keyword is embedded in the video. A position h on the content B indicates the head of a scene immediately before the scene including the frame in which the keyword is embedded in the video.

When the scene C of the content A has been reproduced, the player 1524 starts reproducing the content from any one of the positions e to h of the content B.

When a content is reproduced, the player 1524 reads the content stored in the storage 190, and inputs the content to the audio processing module 121 and the video processing module 131. As described above, the audio processing module 121 and the video processing module 131 demodulates an audio signal and a video signal, which can be reproduced by the speaker 300 and the display 400, from the data of the content, and outputs the audio signal and the video signal to the speaker 300 and the display 400, respectively. Therefore, the broadcast receiving apparatus 100 can reproduce the content in such a manner that the user can view the content.

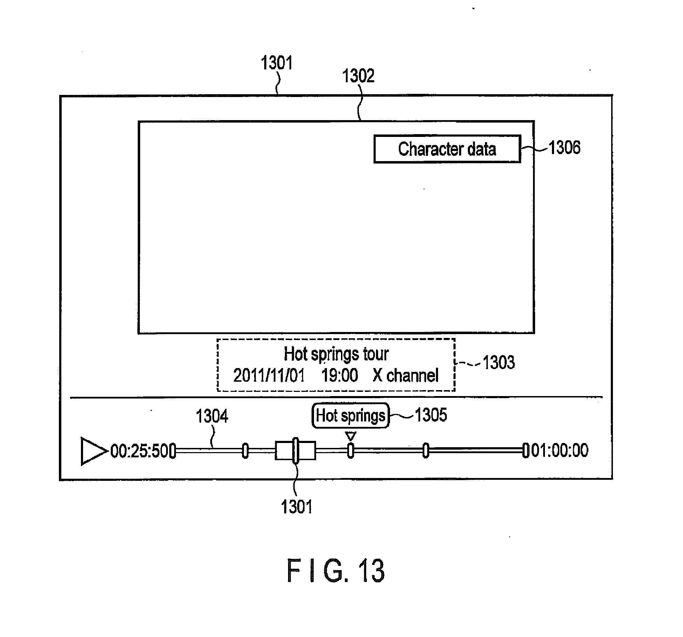

FIG. 13 illustrates an example of a display screen when a content is reproduced.

The broadcast receiving apparatus 100 generates a reproduction screen 1301, and outputs the reproduction screen 1301 to the display 400. The broadcast receiving apparatus 100 displays a display window 1302, a content information 1303, a time bar 1304, and the like on the reproduction screen 1301.

The display window 1302 is a window in which the video of the content reproduced is displayed. The content information 1303 is an indication of a content name, a date, a channel, or other information about the content. The time bar 1304 is an indication of a reproduction position at the current time in the content.

The time bar 1304 includes an indication of the position of the scene detected according to the above method. Still further, the time bar 1304 displays a words balloon 1305 identifying and indicating the scene including the frame in which the keyword is embedded in the video. In the words balloon 1305, keyword used for the search described above is displayed.

For example, the words balloon 1305 is displayed at the position of the frame in which the keyword is embedded in the video. For example, the words balloon 1305 is displayed at the head of the scene including the frame in which the keyword is embedded in the video. Therefore, the broadcast receiving apparatus 100 can allow the user to easily confirm the position of the frame or the scene in which the keyword is embedded in the video.

When a keyword is displayed in the display window 1302, the broadcast receiving apparatus 100 may display, in the display window 1302, the position at which the keyword in the video appears, i.e., an object 1306 emphasizing the character area extracted by the character area extraction module 1511. The object 1306 emphasizes the character area or the keyword using, for example, a solid frame or a dotted frame enclosing the character area, an underline, or other methods. Therefore, the broadcast receiving apparatus 100 can allow the user to easily confirm the keyword.

Still further, the broadcast receiving apparatus 100 may be configured to display, in real time within the reproduction screen 1301, a time until the frame in which the keyword is embedded in the video is displayed. Therefore, the broadcast receiving apparatus 100 can allow the user to easily confirm the time to the frame in which the keyword is embedded in the video.

As described above, the broadcast receiving apparatus 100 extracts keywords embedded in the video of each content while multiple contents are recorded, and records the extracted keyword in association with the respective contents. In this case, the controller 150 of the broadcast receiving apparatus controls the interval of frames from which keywords are extracted based on the genres of multiple contents, viewing history of contents in the past, recording history of contents in the past, search history of contents, a time period, a viewing rate, whether in a CM section or not. As described above, the processing interval is controlled according to the content, so that the controller 150 can prevent omission of extraction of a keyword and can reduce the load of the processing.

Further, the controller 150 performs error correction using character areas and character data extracted from preceding and subsequent frames with respect to the frame from which the character data have been extracted, and therefore, keywords can be extracted more accurately.

Still further, the controller 150 uses the keyword dictionary 1514a set in advance to identify the genre for each keyword. Therefore, the controller 150 can add information indicating the genre to the keyword.

The controller 150 searches contents satisfying a search condition from among the contents stored in the storage 190 based on a keyword specified by the user, a genre, a channel, a date, or other search conditions. The controller 150 causes the display 400 to display the list based on the search result. Therefore, the broadcast receiving apparatus 100 searches contents according to user's demand, and allows the user to confirm the contents as the list.

As a result, the image processing apparatus and the controlling method for the image processing apparatus can be provided with a higher degree of convenience.

## Claims

1. An image processing apparatus **characterized by** comprising:
a receiver (111, 112) configured to receive a plurality of contents at a time;
a decoder (112) configured to decode, at a time, the plurality of the contents received by the receiver;
a keyword extraction module (1514) configured to extract, in order, a keyword from videos of the plurality of the decoded contents;
a memory (1515) configured to store, for each of the contents, the keyword extracted by the keyword extraction module; and
a controller (150) configured to control, for each of the contents, a processing interval of processing of extracting the keyword performed by the keyword extraction module.

2. The image processing apparatus according to claim 1, **characterized in that** the controller identifies a genre of each of the contents, and controls, for each of the contents, the processing interval of the keyword extracting processing based on the identified genre.

3. The image processing apparatus according to claim 2, **characterized in that** the controller controls, for each of the contents, the processing interval of the keyword extracting processing based on one of or a combination of two or more of a processing load of the entire image processing apparatus, the genres of the contents, a viewing history, a recording history, a search history, a time period, viewing rates of the contents, a keyword extraction result extracted from frames of the past, and a detection result of a CM section.

4. The image processing apparatus according to claim 1, **characterized in that** the keyword extraction module comprises:
a character area extraction module (1511) configured to extract a character area, in which a character is embedded, from one frame of the content;
a character data recognition module (1512) configured to recognize character data from the video in the character area; and
a correction module (1513) configured to correct the character area extracted by the character area extraction module based on the character area extracted from preceding and subsequent frames with respect to the frame, and correct the character data recognized by the character data recognizing module based on the character data recognized from the preceding and subsequent frames with respect to the frame.

5. The image processing apparatus according to claim 4, **characterized in that** the keyword extraction module extracts the keyword by separating the character data recognized by the character data recognition module, and
the memory module stores information indicating the character area, the character data, and identification information for identifying the frame.

6. The image processing apparatus according to claim 5 **characterized by** further comprising a keyword dictionary (1514a) in which a genre is associated with each keyword in advance,
wherein the keyword extraction module identifies the genre of the extracted keyword based on the keyword dictionary, and identifies the genre of each of the frames based on the identified genre of the keyword, and
the memory stores the identified genre in association with the identification information of the frame.

7. The image processing apparatus according to claim 6, **characterized in that** the character data recognition module recognizes a font of the character data, a character size, a number of characters, and a character color, from the video in the character area, and
the memory further stores the font of the character data, the character size, the number of characters, and the character color in association with the identification information of the frame.

8. The image processing apparatus according to claim 4,
**characterized in that** when the character area exists at a same position of a plurality of successive frames, the controller identifies a first frame and a last frame in which the character area is displayed, and
the memory stores identification information representing the first frame and identification information representing the last frame in association with the content.

9. The image processing apparatus according to claim 8,
**characterized in that** when the character area exists at a same position of a plurality of successive frames, and character data in the character area are the same over the plurality of successive frames, the controller identifies the first frame and the last frame in which the character area is displayed.

10. The image processing apparatus according to claim 1 **characterized by** further comprising:
a keyword selection module (1521) configured to select a keyword based on input;
a retrieval module (1521) configured to search a content comprising a frame including the keyword selected by the keyword selection module from the contents stored by the memory module; and
a list display (1522) configured to generate a screen as a list of content names of contents satisfying a search condition based on a search result provided by the retrieval module.

11. The image processing apparatus according to claim 10 **characterized by** further comprising:
a genre selection module (1521) configured to select a genre based on input,
wherein the retrieval module searches a content including the keyword selected by the keyword selection module and including a frame matching the genre selected by the genre selection module, from among the contents stored by the memory.

12. The image processing apparatus according to claim 10, **characterized in that** the keyword selection module comprises:
a keyword receiver (1521) configured to receive a plurality of keywords; and
a keyword display (1521) configured to generate a screen as a list of the plurality of the keywords received by the keyword receiver,
wherein the plurality of the keywords displayed as the list are selected based on input.

13. The image processing apparatus according to claim 10,
**characterized in that** the list display generates the screen by ordering the content searched by the retrieval module based on one of or a combination of two or more of an order of date, an order of display time of character data, an order of display position of character data, an order of degree of importance of keyword, an order of font of character data, and an order of size of character data.

14. The image processing apparatus according to claim 10 **characterized by** further comprising:
a content selection module (1523) configured to select one of the contents displayed as the list based on input; and
a player (1524) configured to reproduce the content selected by the content selection module, generate a reproduction screen, and output the reproduction screen.

15. A controlling method for an image processing apparatus, **characterized by** comprising:
receiving a plurality of contents at a time;
decoding the plurality of the received contents at a time;
extracting, in order, a keyword from videos of the plurality of the decoded contents;
storing, for each of the contents, the keyword extracted; and
controlling, for each of the contents, a processing interval of processing of extracting the keyword.
